# EUROPEAN PATENT SPECIFICATION

(11) **EP 4 179 353 B1**
(45) Date of publication and mention of the grant of the patent: **18.02.2026**
(21) Application number: 21739635.7
(22) Date of filing: 02.07.2021
(51) Int. Cl.: G01S 7/00, G01S 7/02

(54) **NETWORK-BASED CO-EXISTENCE OPERATIONS INVOLVING A RADAR-ENABLED USER EQUIPMENT**
NETZWERKBASIERTE KOEXISTENZOPERATIONEN MIT EINEM RADARFÄHIGEN BENUTZERGERÄT
OPÉRATIONS DE COEXISTENCE BASÉES SUR RÉSEAU IMPLIQUANT UN ÉQUIPEMENT UTILISATEUR ACTIVÉ PAR RADAR

(30) Priority: 10.07.2020 US 202063050141 P
(43) Date of publication of application: 17.05.2023
(73) Proprietor: Telefonaktiebolaget LM ERICSSON (PUBL), 16483 Stockholm (SE)
(72) Inventor: KALANTARI, Ashkan, 211 27 MALMÖ (SE); DAHLGREN, Fredrik, 224 65 LUND (SE); REIAL, Andres, 234 40 LOMMA (SE); SANDGREN, Magnus, 245 44 STAFFANSTORP (SE); SJÖLAND, Henrik, 224 68 LUND (SE); ZOU, Gang, 226 49 LUND (SE)
(74) Representative: Ericsson
(86) International application number: PCT/EP2021/068322
(87) International publication number: WO 2022/008372

(56) References cited:
- WO-A1-2015/130336
- WO-A1-2020/018179
- WO-A2-2013/106740
- GB-A- 2 570 389
- US-A1- 2017 041 038
- US-A1- 2020 025 265
- US-A1- 2020 036 487
- US-A1- 2020 187 126

## Description

### TECHNICAL FIELD

The present disclosure relates to radar-enabled user equipments and, specifically, to co-existence operations involving radar-enabled user equipments.

### BACKGROUND

Adopting millimeter wave (mmW) frequency ranges for wireless communication networks allows using more antennas with smaller distances, which provides various advantages, including the ability to perform beamforming at the User Equipments (UEs). As a result, device manufactures are equipping UEs, such as those configured for use with communication networks based on Fifth Generation (5G) New Radio (NR) specifications, with antenna panels. Antenna panels can be installed in different locations within a UE and face different directions. In addition, each antenna panel generates different beams depending on the spatial filtering used. Panel orientation changes when the orientation of the UE changes.

The same or similar frequency ranges may be used for radar probing, wherein one or more UEs use radar transmissions for sensing their surrounding environments. As one example, radar probing facilitates autonomous navigation by mobile robots or Autonomous Guided Vehicles (AGVs). As another example, radar probing allows UEs to detect walls or other obstructions proximate to their current position, which may interfere with communications or other operations.

UEs performing radar probing in the same or overlapping mmW frequency range(s) used by wireless communication networks raises the potential for significant interference between radar transmissions and communication transmissions. Such UEs are referred to as "radar-enabled UEs", to denote a wireless communication device that is configured for accessing and using a wireless communication network and further configured to perform radar probing of its surrounding environment.

As used herein, the term "radar" refers to a type of sensing in which one or more radiofrequency signals are transmitted (by one or more transmitters) into a sensing environment, and reflections of those signals are received (by one or more receivers). An analysis of the received reflection signals provides information about objects that the signals reflected off of in the sensing environment.

Regarding the operation of radar-enabled UEs, U.S. Pub. 2019/0293781 A1 proposes using separate (orthogonal) resources of a radio channel for transmitting communication signals versus radar signals. While U.S. Pub. 2017/0318470 A1 also considers radar, it more broadly addresses different networks operating in the same shared spectrum, rather than the challenges associated with having radar-enabled UEs operating in a wireless communication network. Similarly, U.S. Pat. 10,439,743 B2 addresses radar in the context of wireless communication systems coexisting with, for example, automotive radar systems. Relevant prior art can be found also in US 2020/187126 and US 2020/036487.

### SUMMARY

One or more network nodes are configured for operation in a wireless communication network and, specifically, are configured to provide for co-existence between radar-scanning operations of a radar-enabled UE and network communications, where the radar transmissions are in a same or overlapping frequency range as regards the network communications.

Aspects of the invention are provided in the independent claims. Embodiments thereof are provided in the dependent claims.

In an example implementation, a radio network node, referred to as an access point or base station supports coexistence between radar sensing and network communications that are subject to interference from the radar sensing. The radar signal of the radar-enabled UE may interfere with radio network nodes of the network receiving uplink signals from other UEs and/or may interfere with other UEs receiving downlink signals from the network.

Of course, the present invention is not limited to the above features and advantages. Those of ordinary skill in the art will recognize additional features and advantages upon reading the following detailed description, and upon viewing the accompanying drawings.

### BRIEF DESCRIPTION OF THE DRAWINGS

Figure 1 is a logic flow diagram of an example embodiment comprising a method of operation by a wireless communication network, e.g., by one or more nodes of the network, for coexistence between network communications and radar sensing by a radar-enabled UE.
Figure 2 is a logic flow diagram of another example embodiment comprising a method of operation by a wireless communication network for coexistence between network communications and radar sensing by a radar-enabled UE.
Figure 3 is a logic flow diagram of yet another example embodiment comprising a method of operation by a wireless communication network for coexistence between network communications and radar sensing by a radar-enabled UE.
Figures 4-6 are block diagrams of example communication networks and associated wireless communication devices, also referred to as User Equipments (UEs).
Figure 7 is a block diagram of example implementation details for a network node configured to provide coexistence functionality, for coexistence between network communications between radar sensing by a radar-enabled UE and network communications going between a radio network node of the network and one or more other wireless communication devices.

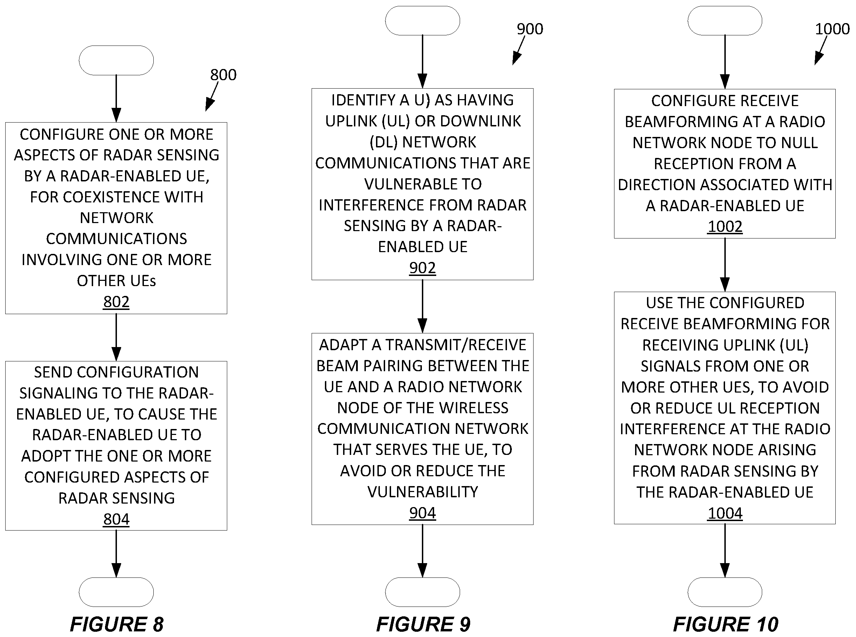

Figures 8-10 are logic flow diagrams of additional example embodiments, involving methods of operation by a network node for coexistence between network communications involving a radio network node and one or more UEs and radar scanning by a radar-enabled UE.

### DETAILED DESCRIPTION

5G NR uses the mmWave frequencies (denoted as Frequency Range 2 or FR2) for communication in TDD mode. UEs can use the mmWave frequencies to send radar signals. This may cause interference toward the NW (Uplink or UL interference) or other UEs (Downlink or DL interference) depending on whether the radar-enabled UE performs radar transmissions in the UL or DL phases of the TDD communication protocol.

The radar operation of the UE may cause interference in the following phases of the mmWave TDD:
Radar operation during uplink phase of TDD: The radar-enabled UE transmits radar signals that may interfere with the uplink signal of other UEs, e.g., control/data/SRS, at the NW during the uplink phase of mmWave TDD.

Radar operation during downlink phase of TDD: The radar-enabled UE sends radar signals that may interfere with the downlink signal sent by the NW toward the surrounding UEs during downlink phase of TDD. The level of interference depends on the distance between the radar-enabled UE and the other UEs. Depending on the distance and orientation of other UEs, the radar-enabled UE may change the strength or direction of the radar signal adaptively.

Defined TDD slot format configurations defined in the technical specifications from the Third Generation Partnership Project (3GPP) for New Radio (NR) indicate how each symbol within a single slot is used. It defines a symbol as either assigned for uplink, downlink or as flexible. A flexible symbol (which does not exist in 4G Long Term Evolution or LTE) can either be used for uplink, downlink or TDD guard. A flexible symbol allows a dynamic NW downlink/uplink dependent traffic allocation.

Here, those beams of the radar-enabled UE which cause interference below a threshold are denoted as "unrestricted beams" and those beams which cause higher than the threshold interference are denoted as "restricted beams". Saying that a "beam" causes interference refers to a radar transmission via the beam in question causing interference. Consider a case where the radar-enabled UE has a number of defined beam directions with respect to each of one or more antenna panels. The absolute directionality of those beams in free space around the radar-enabled UE depends on the current position and orientation of the radar-enabled UE. Beam directions for which radar transmissions by the radar-enabled UE are known or estimated to cause UL reception interference at a radio network node receiving an UL transmission from another UE or cause DL reception interference at another UE are referred to as problematic or interference beam directions and may be classified as "restricted".

The radar signal of the UE may interfere at the BS during uplink phase of TDD and/or other UEs during downlink phase of TDD in different directions. In the context of this disclosure, the network (NW), e.g., base station, performs uplink, downlink, or joint uplink and downlink resource management to enable a UE to perform radar sensing during uplink and/or downlink phases of a mmWave TDD system. These operations allow the network communication signals, e.g., 5G NR signals, and radar signals to coexist during those TDD phases. A radar scan that causes interference in one phase of TDD, may not cause interference in the other phase of TDD. As an aware central node, the contemplated wireless communication network (NW) can manage the resources and decide the proper phase for radar sensing.

In one embodiment, the NW first identifies the "restricted" and "unrestricted" beams of the radar-enabled UE and then performs one of the following techniques to avoid radar interference at the NW (during uplink) and/or other UEs (during downlink):

### Uplink and/or downlink transmission power control

The NW controls the radar signal power to enable radar sensing through potentially interfering beams of the radar-enabled UE. The NW can signal transmission power limits to the radar-enabled UE(s) such that the radar signal will not cause interference during uplink and/or downlink phases of the TDD. The NW may use the information of the presence of other UEs such as their position, orientation, and density to estimate the allowed strength of the radar sensing and signal it to the corresponding radar-enabled UEs. This power control can be adaptive based on the interference threshold of the NW and the UEs, as well as the use-case criticality of ongoing transmissions. In a similar way, the NW may control allowable power level for radar sensing for one radar-enabled UE in view of other radar-enabled UEs performing radar sensing, e.g. based on use-case criticality of ongoing radar sensing. Still in a similar way, the NW may control allowable power level or other resource scheduling for communication transmissions of one or more UEs in view of a radar-enabled UE performing radar sensing, e.g. based on use-case criticality of ongoing radar sensing in view of use-case criticality of communication transmissions.

### Interference mitigation by signal processing at the NW

The NW can use nulling, interference cancellation, or blank reception to mitigate the radar interference. Nulling in this context means reducing impact of an undesired signal to such a degree, i.e. as good as technically feasible, that the impact is diminished, and does not necessarily mean completely removing the interfering signal.

### Interference suppression using waveform allocations

The NW can allocate specific waveforms for radar sensing-i.e., for use by the radar-enabled UE for radar-signal transmissions-and the NW then applies or assists signal correlation to suppress the radar interference. That is, the NW performs signal correlation for interference suppression at one or more BSs vulnerable to UL reception interference from the radar signals and/or the NW sends the correlation details as assistance information for use by UEs that are vulnerable to DL reception interference from the radar signals. Here and elsewhere in this disclosure, references to the "NW" performing operations can be understood as indicating that one or more functional entities of the wireless communication network perform the operations. The one or more functional entities are implemented via the processing circuitry of one or more nodes. As an example, at least some of the NW operations detailed herein may be performed on a per base-station (BS) basis, e.g., references to the NW taking an action can be understood in such examples as a BS of the network taking such actions.

### Uplink and/or downlink radio resource reservation

The NW may reserve but not allocate uplink or downlink resources, e.g., with the uplink resources equivalent to UL Sounding Reference Signals (SRS) and the downlink resources equivalent to DL Channel State Information Reference Signals (CSI-RS), and configure the radar-enabled UE to transmit a sensing signal in the reserved time/frequency/spatial resources during the relevant UL/DL phases of mmWave TDD. The NW may coordinate the resources, e.g., time/frequency/spatial separation, for the UEs that are vulnerable to interference from radar sensing by the radar-enabled UE.

The NW can allocate resources to a specific interfering radar-enabled UE in the following ways:
Standing permission: The radar-enabled UE receives a pre-grant from the NW that allows radar sensing in time and frequency domain patterns unless the NW specifically mentions that it is not being allowed.

A pre-grant could still exclude certain time, frequency, location, direction, or power level, i.e., the pre-grant could have certain pre-defined limitations.

One-time permission (more specific): The radar-enabled UE regularly receives pre-scheduling information (time and frequency) from network in advance when radar transmission is allowed. Pre-scheduling can be based on a request from the radar-enabled device, e.g., desired periodicity and sensing bandwidth.

The NW can dynamically switch between these two approaches, e.g., depending on regular communication traffic characteristics.

### Hybrid power control and resource reservation

The NW can schedule the resources and power of the communication and sensing during uplink and/or downlink to enable radar sensing in desired directions, which are restricted.

### Example Advantages of one or more proposed embodiments regarding 5G Networks

Mitigates the radar interference at the NW when a radar-enabled UE sends radar sensing signals in the same frequency and direction as 5G NR during the uplink phase of the TDD.

Mitigates the radar interference caused by a radar-enabled UE to the surrounding UEs when the radar-enabled UE sends radar sensing signals during the downlink phase of the TDD in the same frequency range and direction as the 5G NR or sidelink UEs.

Uses approaches where the NW gathers interference information of radar and non-radar users and coordinates the radar and 5G signals based on them.

It allows complementary radar scans during uplink and downlink phases of the TDD for maximum area sensing. It uses the fact that different restrictions may apply to a UE's beam during uplink and downlink.

The NW applies different threshold levels and scheduling depending on communication criticality to enable different protection levels.

In more detail, this disclosure proposes network (NW) coordinated techniques to reduce the radar interference during uplink and/or downlink phases of the mmWave TDD.

### Signaling the allowed beam direction and sensing phase

As the first step, the NW can signal the allowed beam directions, "unrestricted", to the radar-enabled UE.

### Detecting the "unrestricted" beam direction using uplink channel sensing

The NW can use a new signaling mechanism to indicate if the estimated power of a received channel estimation signal, e.g., SRS signal, of a specific beam allows the radar-enabled UE to use that beam for radar sensing during uplink phase of TDD. The NW can allow radar sensing through those beams of the UE that result in lower than threshold interference at the NW.

### Detecting the "unrestricted" beam direction using downlink channel sensing

The NW may use the acquired knowledge in step 0 to indicate restricted and unrestricted beam directions for radar sensing during DL phase of TDD to avoid interference toward surrounding UEs. For example, beam directions pointing in the directions of a few nearby UEs may be excluded but the rest of the directions may be included in the sweep.

There might be situations where "restricted" beam of the radar-enabled UE is "unrestricted" in the other phase of the TDD, i.e., uplink or downlink. The NW can further signal the allowed sensing TDD phase to the radar-enabled UE.

### NW coordinated power control

The radar-enabled UE may have no "unrestricted" beams toward a desired sensing area during one of the TDD phases. A lower radar sensing power can change a beam from "restricted" into "unrestricted". The UE may lack the knowledge to coordinate this, but the NW can use the sensed interference either by own measurements or through UE measurement reports and/or the knowledge of the surrounding UEs to estimate the allowed power of the radar signal and inform the radar-enabled UE. For example, if there are no UEs within a specific distance of the radar-enabled UE, it can transmit with a specific power level such that it won't interfere with other UEs. Since the NW knows the criticality of the communication, it can adapt the allowed radar power based in it.

In one or more embodiments, communication criticality is one important factor in defining the allowed interference threshold. Since the NW is aware of the traffic, it decides the criticality of the communication, e.g., URLLC, and adapts the allowed radar power. For example, the consequence of the interference to conventional mobile broadband is much less than URLLC. The BS type also affects the allowed radar threshold. For example, a Macro BS may allow a lower radar power since it is an anchor cell and communicating with many UEs, thus the NW impact of potential interference is higher.

The radar-enabled UE could use less power with longer time period to sense if things are not moving fast.

### Power control within UL

The NW can use a power control mechanism, a standard 3GPP approach or alternative, to keep the radar interference below a certain threshold in critical beam directions and prevent radar interference during uplink phase of TDD. This threshold for the radar signal can be tuned based on the uplink communication power of other UEs. The NW can use the following knowledge to mitigate uplink interference:
The location and density of the UEs.

The desired sensing area of the radar-enabled UE.

The absolute or relative output power of communication or radar from different beams of the radar-enabled UE.

The amount of interference toward the BS during uplink phase of TDD

BS capability to mitigate such interference.

The amount and criticality of the traffic carried UL within certain areas, i.e., a TDD with lower traffic is suited more for radar sensing.

The sidelobes of the radar beam of the radar-enabled UE (optional)

The orientation of the surrounding UEs (optional).

The NW can use the following possible interference mitigation approaches:
Assuming channel symmetry in uplink and downlink, the NW can request RSRP measurements from the radar-enabled UE and estimate the pathloss to the radar-enabled UE using the feedback from the UE. The NW uses this information to signal allowed power level of different beam directions for sensing during uplink phase of TDD. Since the power restriction only relates to specific beam directions, the NW may use means to identify and exchange information about radar sensing beam direction (panels and beams within panels) and corresponding allowed power levels. In one embodiment, the NW may request larger SRS sweeps to evaluate a larger span or SRS directions.

The NW may ask the surrounding UEs to increase their uplink power so that the radar-enabled UE can sense with a higher power. For example, if a UE uses SRS for radar sensing, the BS can signal the UE to use the SRS power control mechanism and increase the power of the SRS. If the NW does not expect communication in the radar direction, the radar-enabled UE can transmit with full power.

If the radar-enabled UE knows the power limit of its best beam toward the NW, it can apply the same power level when sending radar signal through its other beams. In a more advanced approach, the UE can use the beam training data to estimate the SRS power limit on its beams.

The NW may use the radar signal characteristics to identify the interfering radar-enabled UE and ask to reduce the radar sensing power.

### Power control within DL

The NW can use certain knowledge to signal the allowed power of specific beam directions of the radar signal to the radar-enabled UE. This knowledge can be:
The position of the radar-enabled UE and surrounding UEs: The NW can estimate these positions using BS beam directions (Angle of Arrival (AoA) / Angle of Departure (AoD)), Timing Advance (NTA part giving RF propagation distance), network based positioning technologies like fingerprinting, RSRP, DL OTDOA, UL TOA, RTT measurements, or UE autonomous derived positioning, e.g., from internal GNSS receiver or other sensors.

The UEs may send their position to the NW through one of these frameworks:
A radar-enabled UE that operates in licensed spectrum might need to be cooperative as a prerequisite and share its position with a certain accuracy.

The NW may request the other UEs to provide their position together with a confidence metric. The NW uses the confidence value as a safety margin when indicating distances to other UEs.

The density of the surrounding UEs, which may be concluded using the estimated positions from the previous step.

The desired sensing area of the radar-enabled UE.

The capability of the surrounding UEs' to cancel or null the interference.

The amount of interference toward the victim UEs during downlink phase of TDD.

The amount and criticality of the communication of the UEs.

The sidelobes of the radar-enabled UE and the surrounding UEs (optional).

For example, the NW node receives interference mitigation capabilities, e.g. information about the UEs' capabilities to cancel, null, or at least reduce interference and thus also interference caused by the radar sensing, from the surrounding UEs. When the NW node is scheduling of resources for radar sensing to the radar-enabled UE, the NW node can take these interference mitigation capabilities into account. Furthermore, the NW node can also transmit an indication to the surrounding UEs, when radar sensing is scheduled, that interference mitigation should be applied, or at least is advised.

To further reduce the radar sensing interference during the DL phase of TDD, the NW may use the following additional information:
The beams of the surrounding UEs that are paired with the BS

The orientation of the surrounding UEs. The BS could use the index of the paired beam from UE side and find the related panel and estimate the orientation of the UE.

The NW can implement the following approaches to mitigate the radar interference during DL phase of TDD:
The surrounding UEs could report radar interference to the NW and the NW uses the region knowledge to signal the concerned radar-enabled UEs to lower their transmission power in respective directions.

The NW uses its communication scheduling knowledge and sensing resources, e.g., based on beam sweep and related timings of occurrence, to identify the interfering beam directions of the aggressor radar-enabled UE and signal it to reduce the sensing power.

The NW may use unique signature characteristics, e.g., a sequence ID, in addition to 5G signals, (at initialization of the service) for the radar transmission to easily and uniquely identify the interfering beam directions of the aggressor and signal power reduction at certain direction.

### Joint uplink and downlink power control

The NW coordinates both uplink and downlink power control to avoid radar interference; for a better interference mitigation, it can decide if the radar-enabled UE should sense the environment during uplink or downlink phase of TDD. The NW can use the knowledge mentioned in the previous sections along with the following information to make the decision on which phase the radar-enabled UE should use for radar sensing of its surrounding environment:
The NW may prioritize robustness and avoid the risk of radar misbehavior by allowing radar sensing in the UL phase only if the anticipated interference level does not cause discernible UL interference in any radar beams. If one or more beams causes problematic interference at the NW, e.g. if the UE is closer to the BS than a threshold (where the threshold may depend on the intended radar power indicated by the UE), the UE may be allowed to perform radar sensing only in the DL phase. The radar-enabled UE can use the IMU information to translate the power limit restrictions to other beams of the radar-enabled UEs and avoid unnecessary signaling from the NW.

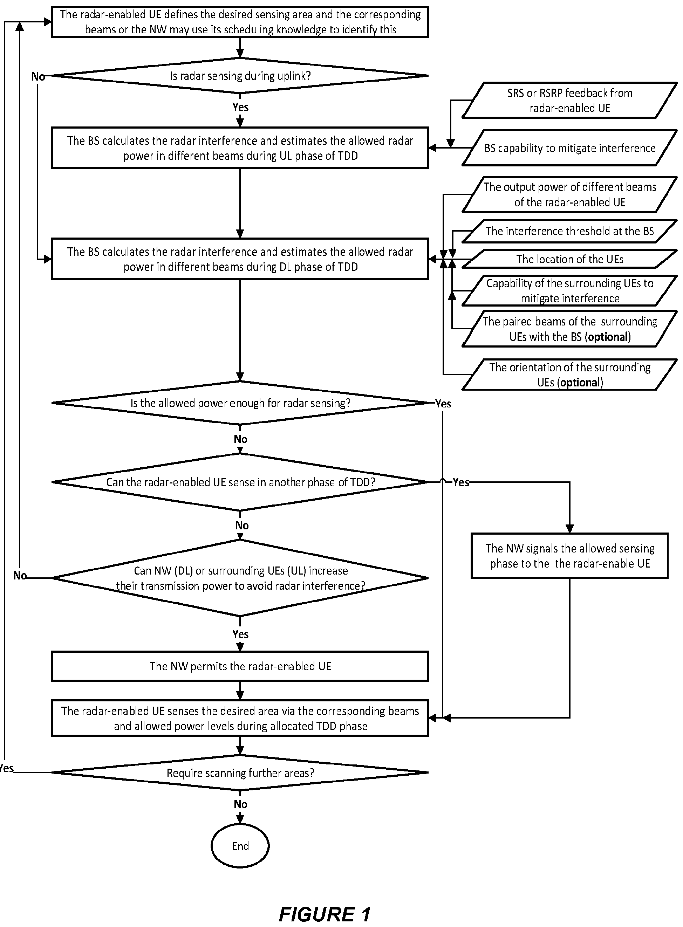

Figure 1 depicts an example power control mechanism for 5G and radar coexistence in one or more embodiments. The example mechanism provides for mitigation by the NW of radar interference during UL or DL phase of TDD. Note that "RSRP" in the diagram denotes "Reference Signal Received Power".

### UL radar interference mitigation

### NW nulling to avoid radar interference

Since NW schedules the transmission and reception of the UE, knows the waveform, and may know the position and orientation of the radar-enabled UE, it can use null beamforming in identified directions towards aggressor to avoid radar interference during uplink phase of TDD while serving the UEs in other directions at the same time. If the communication and the radar signal come from the same direction, the nulling interrupts the communication but this could be handled through proper T/F scheduling of the other UEs by the NW.

The radar signal can have a UE specific and common part. If the NW is not aware of the transmission time of the radar signal, it can use the common part of the radar signal to detect the radar transmission and then null all (specific and common) of the radar signal.

### Radar signal cancellation

If the NW knows the channel and the radar waveform, it can subtract the radar signal. The NW can cancel the radar signal using information about an agreed predetermined pattern between the NW and the radar-enabled UE, the channel characteristics (channel estimation information), and the waveform characteristics of the radar signal, e.g., NW could use correlation or scheduling information of the radar-enabled UE to figure out the used radar signal. When the radar and communication transmission happen during uplink phase of TDD, the NW estimates the arrival time of the radar signal and uses it along with the mentioned prior information to cancel the radar interference. The network can regularly measure and control uplink timing alignment of radar transmission through existing Timing Advance (TA) control loop for regular communication or similar new dedicated approaches. Alternatively, the radar signal may be detected by time-domain hypothesis testing of possible delays of the known signal. The NW can estimate the channel using the known T/F structure of the signal and de-rotating the received signal REs (resource element, one subcarrier and one OFDM symbol) to obtain the channel estimates by filtering across multiple adjacent REs.

The difference with the signal cancellation in communication is that in contrary to the communication signal, which carries unknown information, the radar signal is known.

### Blank reception at the NW

If the radar pulse is short compared to the Orthogonal Frequency Division Multiplexing (OFDM) pulse and the arrival time of the periodic and regular radar transmission is known, the BS can stop reception during the radar signal period without losing much energy of the OFDM symbol. Since the NW schedules the radar transmission, it can estimate the arrival time of the radar signal and, as stated earlier, control the radar arrival timing through the Timing Advance (TA) control loop. The benefit is that the NW does not need to know the exact pulse shape of the radar. Only the minimum required fraction of the symbol is discarded (replaced with erasures). The NW may additionally provide an UL grant with a more robust transmission format to compensate for the lost energy. In one embodiment, if the exact arrival instance of the radar signal in unknown but its duration is known, the NW may schedule an even more robust transport format to operate in the presence of radar interference.

If the radar and OFDM symbol use different frequency resources, the NW can filter the radar signal.

### Interference suppression using waveform allocation/control

### Using code division

The NW can apply code division, or generally low-correlation waveforms, to suppress the radar interference at the Bs or UEs during UL, e.g., SRS, or DL, CSI-RS, phases of TDD, respectively. Given enough suppression, the BS may allow the radar-enabled UE to transmit using a signal power or time/frequency/spatial resources that may cause interference at the BS or other UEs. The NW can determine the maximum processing gain provided by interference suppression based on the reserved time/frequency resources for radar transmission, e.g., equal to the number of Resource Elements (REs) utilized for sensing. Longer time/frequency span of the radar signal allows longer matched filtering with more accumulated power, i.e., longer sequence matching results in better interference suppression. Resource elements that are spread in the frequency also increase the processing gain; time and frequency span is interchangeable for suppression purposes. For increased robustness, the projected processing gain may be reduced depending on the temporal variations and time dispersion of the physical link. For example, the RS receiver of the interfered UE may only apply coherent accumulation over a limited F-range to ensure coherence. The processing gain estimate may then be adapted to account for the estimated coherence bandwidth and/or coherence time.

### Using a UL sequence different from the radar sequence

The NW can correlate the uplink signals with a sequence, which is different enough from the radar sequences, i.e., their cross-correlation is below a threshold for the entire sequence length or all subsections. This results in reducing the interference caused by the radar signals in the uplink phase of TDD. For example, if a UE is using SRS for radar sensing during the UL phase of TDD, it can use a sequence that is different from other surrounding UEs such that the interference from the radar signal is suppressed at the BS. Similarly, the radar-enabled UE can use special radar sequences that are different from 5G downlink signals to avoid interference during DL phase of mmWave TDD.

### NW scheduling

### NW resource reservation

The NW may use the power control mechanism to allow radar sensing during uplink or downlink phases of the TDD while reusing resources used by cellular UEs in the NW, but there might be situations where this is infeasible. For example, radar sensing in the desired certain beam directions cause interference, or it is too complex to dynamically identify new beam directions for a mobile/rotating device. In addition, the NW and the surrounding UEs may not be able to create nulls or cancel the radar interference.

The NW can use its knowledge to find new ways to enable 5G and radar coexistence. The NW may allocate radar sensing resources based on short or medium-term traffic and estimated loads. In addition, the network knows in advance when it transmits to a specific device in the downlink, grants coming uplink transmission, and knows when regular control signals like paging or measurements occurs. The NW can reserve resources in one of the following ways:
The traffic is bursty and dynamic over time, the NW can use its knowledge and allocate the free time slots for radar transmission.

The radar sensing and communication can share the same T/F resources for those UE's whose communication link is not interfered, i.e., proper scheduling removes the scheduling overhead. The NW knows in advance when a potential victim UE is expected to receive or transmit and can use that for allowing radar transmission, e.g., an inactive or not communicating device would not receive interference. A UE in active mode has a predictable DRX schedule so the NW knows the communication sleep/awake schedule, where radar activity in sleep period is safe. The NW is aware of rough sleep schedule when UE is in idle mode, but not accurate, based on the paging occasions.

The NW can allocate T/F (time/frequency) resources for the corresponding UEs when they send radar sensing signals through "restricted" beams. This approach lifts the spatial constraints of the radar sensing. The radar-enabled UE can perform sensing the "restricted" beam. This could be in either UL or DL as:
The NW may reserve UL resources in specific radar beam directions, e.g., SRS, and configure a radar-enabled UE to transmit the radar sensing signal, e.g., SRS, in the reserved time (T) /frequency(F)/spatial resources during the uplink phase of TDD. (NW can still schedule communication in other beam directions of the radar-enabled UE if isolation is determined sufficient.)

The NW may reserve DL resources, e.g., CSI-RS, and configure a radar-enabled UE to transmit a sensing signal in the reserved T/F/spatial resources during DL phase of TDD. The NW creates time isolation between the critical victim UE and the radar sensing, which is done through a specific beam of the radar-enabled UE, during DL reception. The NW can still schedule DL traffic to other UEs not in the near vicinity of the radar-enabled device.

In some scenarios, predictable radar operation opportunities are desirable. The NW may reserve a certain subset of T/F/spatial resources for radar operation, e.g., some symbols in slots where PDSCH could otherwise have been transmitted. The NW may then schedule UEs with less stringent quality requirements in the rate-limited slots while more UEs with more demanding service levels are scheduled in unaffected slots.

The NW can consider the likelihood of interference from simultaneous radar sensing and regular communication without scheduling time/frequency/spatial restrictions. If the NW has low and non-URLLC traffic in certain beam directions, considering the low duty cycle of the radar sensing, the NW could apply less restrictions.

The NW can allocate resources to a specific radar-enabled UE, which causes interference in identified directions, in the following formats:
Standing permission: the scheduled UE may not fill the allocated spectrum and the unused carrier frequencies can be allocated for radar sensing, especially for mmWave operation generally used as capacity cells in combination with anchor cells at lower frequency band. The radar-enabled UE receives a pre-grant from the NW that allows radar sensing in time and frequency domain patterns unless the NW specifically mentions that it is not being allowed.

A pre-grant could still exclude certain time, frequency, location, direction, or power level, i.e., the pre-grant could have certain pre-defined limitations.

It fits better a low traffic cell with available spare resources.

The NW could indicate the unavailable resources to the radar-enabled UE if the available resources are abundant and there is a high signaling overhead to indicate them. The unavailable resources could be updated.

One-time permission (more specific): The radar-enabled UE regularly receives pre-scheduling information (time and frequency) from network in advance when radar transmission is allowed. Pre-scheduling can be based on a request from the radar-enabled device, e.g., desired periodicity and sensing bandwidth.

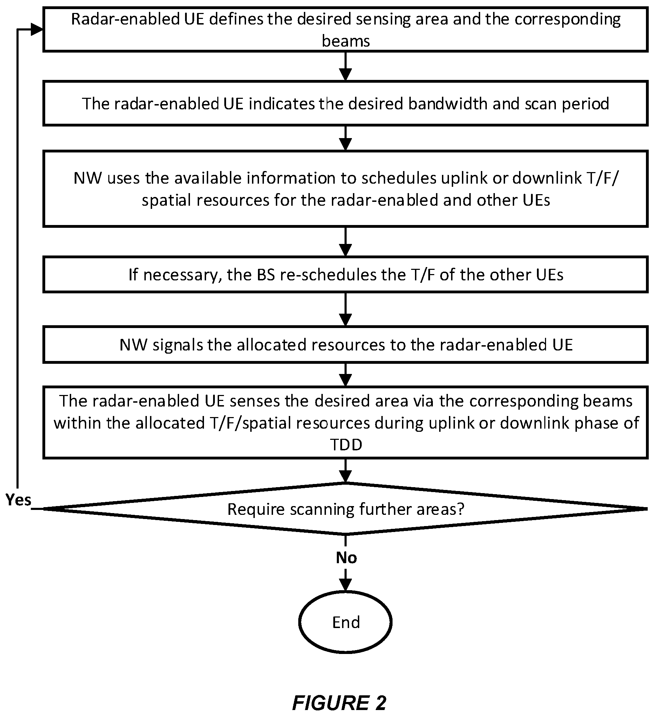

The NW can dynamically switch between these two approaches, e.g., depending on regular communication traffic characteristics. Figure 2 depicts an example resource reservation approach. In Figure 2, the NW reserves T/F/spatial resources during uplink or downlink phases of the TDD to enable radar and communication coexistence.

### Adjacent BSs

If a radar-enabled UE is in the cell edge, it could also interfere with communication signals in the adjacent cells. The adjacent cells can follow a similar strategy to avoid radar interference through coordination among the serving and adjacent BSs. The interference thresholds or constraint levels towards the multiple adjacent cells may be adapted depending on the path loss towards the individual cells and/or their communication criticality.

The NW can evaluate the potential UL interference impact on the adjacent BSs (BSs other than the serving BS) in one of the following ways:
Uplink approach: the NW can configure multiple BSs in a neighborhood of the radar-enabled UE to receive, e.g., SRS, transmissions from the radar-enabled UE. In addition to the best SRS beam as seen by the serving BS, the NW may identify best beams and/or other beams exceeding a quality threshold for additional BSs and inform the radar-enabled UE to treat those beams as restricted ones.

Downlink approach: the radar-enabled UE measures the SSB from the neighboring cells in addition to the serving cell and reports the values to the serving cell. Critical beam directions and pathloss for power thresholds can be derived for neighbor BSs based on this information. The conventional RRM measurement framework and configurable event thresholds and reporting rules may be used to coordinate permitted resources.

The serving cell can configure the radar-enabled UE to change the reporting threshold and/or frequency depending on the situation, i.e., more frequent reporting when closer to neighbor cells. Measuring and reporting the SSB of the neighbor cells already exists for handover purposes, but we use it to control uplink interference. The UE may consider lower threshold when reporting the measurements compared to conventional RRM/handover configurations to elicit the UE to provide richer measurement info to the NW.

### NW mechanism to use the proposed techniques to mitigate radar interference

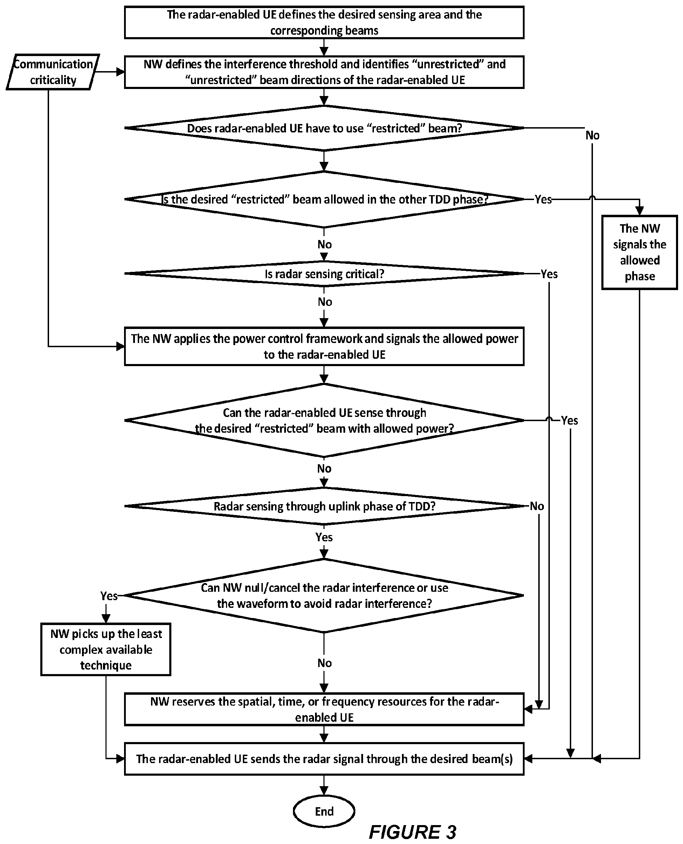

The NW may use the proposed approaches in the previous sections based on the sequence defined in diagram Figure 3, where the NW decides on the mitigation technique to use. Resource reservation is the last option-least preferred-to mitigate interference because it reduces the number or amount of resources available for use by the communication network.

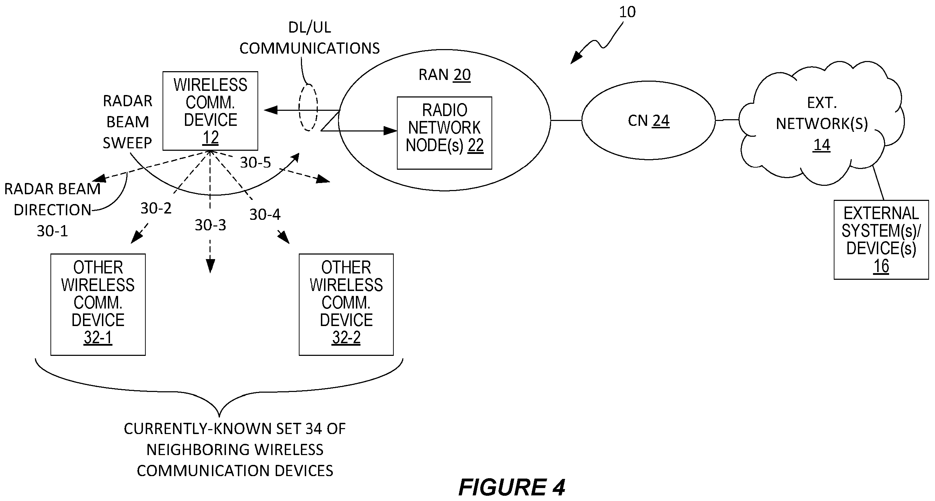

Figure 4 illustrates an example wireless communication network 10, as an example of the NW discussed above. The network 10 operates as an "access network" for a wireless communication device 12, e.g., by communicatively coupling the device 12 to one or more external networks 14 that provide access to one or more external systems or devices 16. Non-limiting examples of communication services provided by the network 10 include voice services and data services and in at least one embodiment the network 10 is configured according to Technical Specifications (TSs) released by the Third Generation Partnership Project (3GPP).

In its example form, the network 10 includes a Radio Access Network (RAN) 20 that includes a number of radio network nodes 22. The nodes 22 may be understood as access points, base stations, or other equipment that is configured to provide the air interface(s) / radio link(s) used to wirelessly connect with the communication device 12. Further, while individual nodes are not illustrated, a Core Network (CN) 24 of the network 10 includes nodes implementing various network functions needed to authenticate and manage the device 12 and to route data to/from the device 12 with respect to the external network(s) 14 and the external systems/devices 16. The device 12 is an example of a radar-enabled UE and the devices 32 are example of other UEs that are potentially vulnerable to DL reception interference from the radar-enabled UE.

At any given time and within any given coverage area of the RAN 20, the network 10 may support a potentially large number of wireless communication devices, also referred to as User Equipments or UEs. The devices may be of varying types and may use different communication services, e.g., some may be smartphones or other personal computing devices, while others are Machine Type Communication (MTC) or Internet-of-Things (IoT) devices, including stationary or embedded devices. Figure 4 suggests various ones of these scenarios by illustrating other wireless communications devices 32-1 and 32-2, in addition to illustrating the device 12. At any given time, there may be none, one, or multiple other wireless communication devices 32 that neighbor the device 12. Here, "neighbor" means proximate to or in the surrounding vicinity of the device 12, e.g., in a radio-range sense.

While the devices 32 may be of the same type as the device 12, the different reference numbers provide clarity for discussing operations of the device 12 as a radar-enabled device, with respect to the potential for its radar transmissions to interfere with the reception network communication signals-Downlink (DL) signals-at one or more other wireless communication devices 32. For example, a radar transmission by the device 12 that is coincident with DL transmission targeting another device 32 may interfere with reception of the DL transmission at the other device 32. In this respect, the device 12 is configured to perform radar transmissions along one or more radar beam directions 30, with example directions 30-1 through 30-5 shown by way of example. Note that for the reference number 30 and any other reference numbers shown with suffixing, the corresponding discussion uses suffixed reference numbers only when needed for clarity.

Later diagrams elaborate details of the device 12 but for now consider that the device 12 in one or more embodiments has transmit beamforming capability and has one or more antennas or sets of antenna elements or antenna panels that allow it to perform beamforming in a plurality of directions that are relative to the orientation of the device 12. In an example case, the device 12 uses predefined beam shapes/directions, where such directions may be predefined with respect to the device 12 but, in an absolute sense depend on the current orientation of the device 12.

Figure 4 suggests that radar transmissions by the device 12 in one or more radar beam directions 30 may interfere with DL reception operations at respective other devices 32, in dependence on a number of factors having complex interrelations. Example factors include the position and/or orientation of the device 12 relative to the other device(s) 32, the position and/or orientation of each other device 32 in relation to the device 12 and/or its serving radio network node 22 in the network 10, and/or the paired beams at respective ones of the other devices 32, the transmission power(s) used by the device 12 for its radar transmissions, the path loss between the device 12 and respective ones of the other devices 32, the frequencies of the communication signals and radar signals, etc.

In a particular example, the network 10 operates according to a Time Division Duplexing (TDD) arrangement that includes a DL phase wherein the network 10 performs DL operations and an UL phase wherein the network 10 performs UL operations, and methods and apparatuses contemplated herein avoid or reduce radar interference by the device 12 with respect to DL reception at one or more other devices 32 during the DL phase of operations. For example, in conjunction with performing a radar beam sweep during a DL phase of operation by the network 10, the device 12 adapts its radar transmissions to avoid transmitting in one or more radar beam direction 30 and/or reduce its radar-signal transmission power in one or more radar beam directions. Such adaptations are not limited, however, to networks using the described UL/DL TDD phases. In at least some embodiments of the device 12 and/or in at least some embodiments of an associated method of operation, the device 12 mitigates or avoids radar interference with respect to DL reception operations by given devices 32 in a currently-known set 34 of neighboring devices 32.

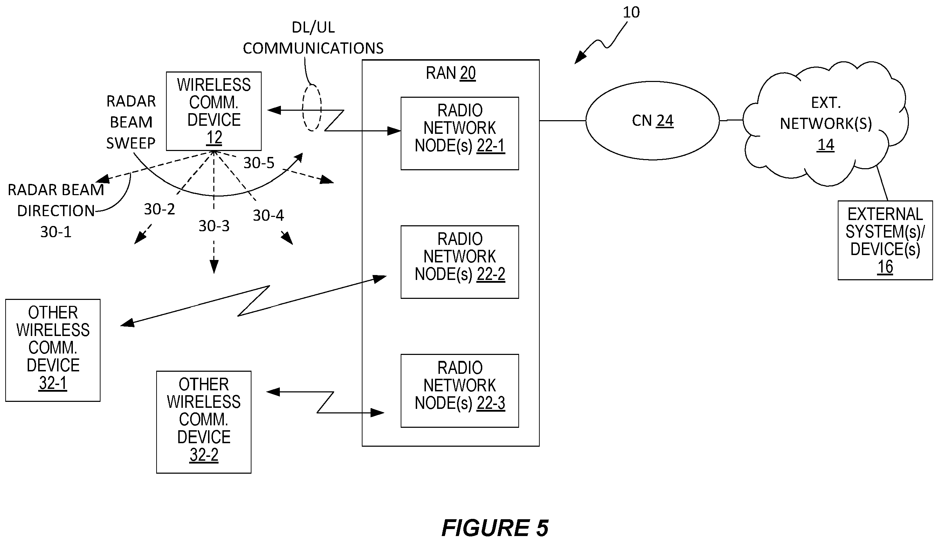

Figure 5 illustrates the network 10 but differs with respect to Figure 4 in that it emphasizes the potential vulnerability of radio network nodes 22 of the RAN 20 to UL reception interference arising from radar transmissions by the device 12.

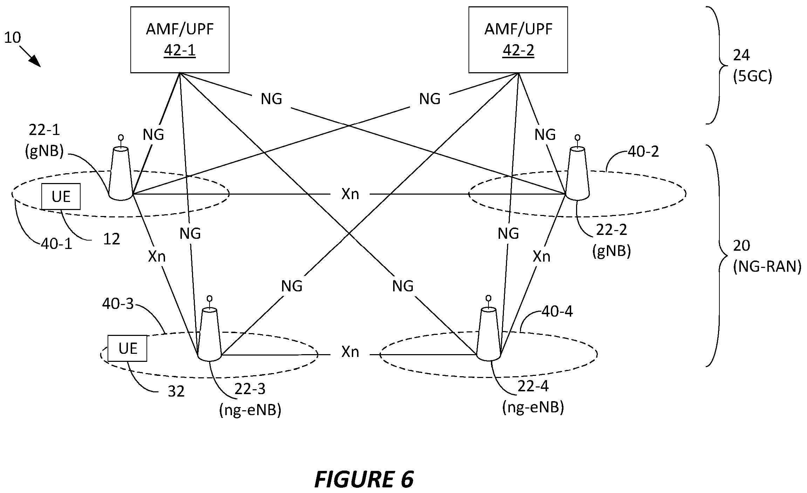

Figure 6 illustrates another example implementation of the network 10, as a Fifth Generation (5G) network having functional elements, interconnections, and operations according to the 5G TS released by the 3GPP. The RAN 20 comprises a Next Generation (NG) RAN wherein one or more radio network nodes provide New Radio (NR) air interfaces.

In particular, in the example depiction, the RAN 20 includes radio network nodes 22 configured as "gNBs" that provide NR air interfaces using the millimeter wave (mmW) frequency range-see the nodes 22-1 and 22-2 configured as gNBs and providing radio coverage in respective coverage areas 40-1 and 40-2. Coverage may be omnidirectional or beamformed or a mix of omnidirectional and beamformed coverage. Additionally, one or more radio network nodes 22 are configured as ng-eNBs, which provide Fourth Generation (4G) Long Term Evolution (LTE) air interfaces but couple to the 5GC-see the nodes 22-3 and 22-4, providing radio service in respective coverage areas 40-3 and 40-4.

The respective coverage areas 40 may overlap at least partly, meaning that NR and LTE air interfaces may be available to a device 12 operating in a location having overlapping coverage, and it should be understood that the devices 12 and 32 depicted in the diagram are shown merely for example. A greater or lesser number of devices may be using the network 10 and may have any given distribution among the respective coverage areas. It should also be understood that radar transmissions from a given device 12 may interfere with the DL reception operations at essentially any other type of device 32, regardless of whether the other device 32 is radar-enabled, to the extent that such transmissions are in frequency range relevant to the DL transmissions.

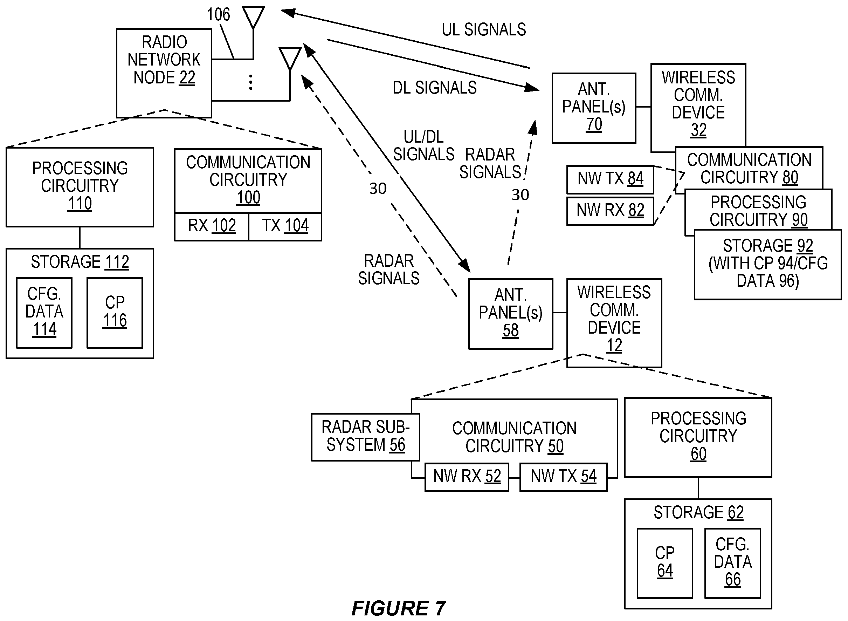

Figure 7 offers an illustrative example, where radar signals transmitted by a device 12 potentially interfere with the reception at a neighboring device 32 of DL signals transmitted by a radio network node 22 of a wireless communication network-i.e., one or more radar beam directions 30 used by the device 12 may be problematic with respect to DL reception operations at the neighboring device 32. In this example, the device 12 is configured for communicating with a wireless communication network and performing radar transmissions for surrounding-environment sensing using a same or overlapping mmW frequency range and the device 12 includes communication circuitry 50 that is configured for wireless communications with respect to the wireless communication network, e.g., the network 10, and for radar transmissions.

In an example implementation, the communication circuitry 50 comprises receiver circuitry 52 (NW RX 52) and transmitter circuitry 54 (NW TX 54) that is configured for receiving DL signals from given radio network nodes 22 of the network 10 and for transmitting Ul signals to given nodes 22 of the network 10. The communication circuitry 50 also includes a radar sub-system 56 that is configured for radar probing-i.e., surrounding-environment sensing based on transmitting radar signals and receiving reflected radar signals in return. In an advantageous but non-limiting example, the radar subsystem 56 reuses all or at least a portion of the circuitry (and antennas) used for communicating with the network 10-e.g., reuse of at least a portion of the receiver circuitry 52 and the transmitter circuitry 54, based on performing radar-signal transmissions in a mmW frequency range that is the same as or overlaps with one or more of the mmW frequency ranges used for communicating with the network 10. Of course, the radar subsystem 56 also may include additional circuitry, such as reception-timing circuitry used to measure return reflections of the transmitted radar signals and it may interface with and/or reuse portions of processing circuitry 60 included in the device 12.

The processing circuitry 60 comprises fixed circuitry or programmatically-configured circuitry or a mix of both types of circuitry. In non-limiting example implementations, the processing circuitry 60 comprises or includes digital processing circuitry, such as one or more microprocessors, Digital Signal Processors (DSPs), Field Programmable Gate Arrays (FPGAs), Application Specific Integrated Circuits (ASICs), Systems on a Chip (SoC) circuits, etc., along with supporting circuitry, such as clocking, interfacing, and power-management circuitry.

In at least one implementation, the processing circuitry 60 comprises one or more computer circuits that are specially adapted to carry out the device-side operations described in any of the device-related embodiments described herein, based at least in part on the execution of computer program instructions stored in a computer-readable media. To that end, in at least one embodiment, the device 12 includes storage 62 comprising one or more types of computer-readable media that store one or more computer programs (CP) 64 and may store related configuration data (CFG. DATA) 66. The storage 62 comprises one or more types of memory circuits or devices and/or one or more types of storage devices, such as volatile working memory for program execution and non-volatile memory for longer-term program storage. Examples include SRAM, DRAM, FLASH memory, EEPROM, Solid State Disk (SSD), etc. Such memory provides for non-transitory storage, which does not necessarily mean unchanging or permanent storage but does connote storage of at least some persistence.

The processing circuitry 60 is operatively associated with the communication circuitry 50, e.g., it uses the communication circuitry 50 to exchange data and control signaling with the network 10 and/or it controls operations of the communication circuitry 50. Further, in an example implementation, the processing circuitry 60 is configured to carry out several device-side operations for avoiding or mitigating DL interference caused by radar transmissions from the device 12.

In an example embodiment of the device 12, the communication circuitry 50 is configured to communicate with a wireless communication network 10 and perform radar transmissions for surrounding-environment sensing using a same or overlapping mmW frequency range. That is, the device 12 performs radar probing using mmW frequencies that are the same as or are relevant to the mmW frequencies used by the wireless communication network 10 for transmitting DL signals.

The other wireless communication devices 32 may or may not be radar-enabled devices and may or may not be of the same type as the example device 12. However, Figure 3 illustrates than a neighboring other device 32 may comprise communication circuitry 80, with network receiver circuitry 82 and network transmitter circuitry 84, processing circuitry 90, storage 92, which may store one or more computer programs 94 and configuration data 96. The device 32 also may include one or more antenna panels 70 for communicating with a wireless communication network 10.

Figure 7 also depicts an example radio network node 22, e.g., as an access point or base station (BS). The node 22 is, in one or more embodiments, configured to perform the NW operations described in this disclosure, either singularly with respect to devices 12 and 32 served by it, or cooperatively with respect to other nodes 22 associated with neighboring cells. The illustrated node 22 includes communication circuitry 100, including receiver (RX) circuitry 102 and transmitter (TX) circuitry 104. One or more antennas 106 (or arrays of antenna elements) are associated with the communication circuitry 100, for transmitting DL signals to given wireless communication devices and receiving UL signals from such devices.

Further, the node 22 includes processing circuitry 110. The processing circuitry 110 comprises fixed circuitry or programmatically-configured circuitry or a mix of both types of circuitry. In non-limiting example implementations, the processing circuitry 110 comprises or includes digital processing circuitry, such as one or more microprocessors, Digital Signal Processors (DSPs), Field Programmable Gate Arrays (FPGAs), Application Specific Integrated Circuits (ASICs), Systems on a Chip (SoC) circuits, etc., along with supporting circuitry, such as clocking, interfacing, and power-management circuitry.

In at least one implementation, the processing circuitry 110 comprises one or more computer circuits that are specially adapted to carry out the network-node-side operations described in any of the node-related embodiments described herein, based at least in part on the execution of computer program instructions stored in a computer-readable media. To that end, in at least one embodiment, the node 22 includes storage 112 comprising one or more types of computer-readable media that store one or more computer programs 116 and may store related configuration data 114. The storage 112 comprises one or more types of memory circuits or devices and/or one or more types of storage devices, such as volatile working memory for program execution and non-volatile memory for longer-term program storage. Examples include SRAM, DRAM, FLASH memory, EEPROM, Solid State Disk (SSD), etc. Such memory provides for non-transitory storage, which does not necessarily mean unchanging or permanent storage but does connote storage of at least some persistence.

The processing circuitry 110 is operatively associated with the communication circuitry 100, e.g., it uses the communication circuitry 100 to send and receive wireless signaling to/from wireless devices. In one or more examples, the processing circuitry 110 is configured to provide one or more coexistence functions, for coexistence between radar sensing by a radar-enabled UE, e.g., the wireless communication device 12 of Figure 7, and network communications, e.g., UL and/or DL signaling going between the radio network node 22 and one or more other UEs, e.g., the wireless communication device 32 of Figure 7.

More generally, a wireless communication network includes one or more nodes that provide coexistence support, e.g., within or across respective cells or service areas of the network 10, to mitigate or avoid interference to network communications arising from the radar scanning operations of one or more radar-enabled UEs that perform radar sensing in a frequency range that is the same as or overlapping with the frequency range of the network communications. In an example case, a base station (BS) of the network performs coexistence operations with respect to the UEs it serves. However, in at least one embodiment, two or more base stations perform coexistence operations individually and/or cooperate with one another for cooperative coexistence support.

Notably, modifications and other embodiments of the disclosed invention(s) will come to mind to one skilled in the art having the benefit of the teachings presented in the foregoing descriptions and the associated drawings. Although specific terms may be employed herein, they are used in a generic and descriptive sense only and not for purposes of limitation. The scope of the invention is defined in the appended claims.

### ABBREVIATIONS:

| **Abbreviation** | **Explanation** |
|---|---|
| SRS | Sounding reference signal |
| NR | New radio |
| UE | User equipment |
| BS | Base station |
| LTE | Long term evolution |
| UL | Uplink |
| DL | Downlink |
| NW | Network |
| IMU | Inertial measurement unit |
| RE | resource element |

## Claims

1. A method of operation by a network node of a wireless communication network comprises:
configuring radar sensing by a radar-enabled User Equipment UE, for coexistence with network communications involving one or more other UEs, wherein the radar sensing and the network communications use a same frequency band or overlapping frequency bands; and
sending configuration signaling to the radar-enabled UE, to enable the radar-enabled UE to adopt the radar sensing, wherein the configuration signaling comprises information about scheduling of resources for radar sensing, wherein the resources comprise allowed power levels and one or more of time resources, frequency resources, and spatial resources.

2. The method of claim 1, wherein the configuration signaling comprises information about scheduling of resources in uplink or downlink slots of the network communications.

3. The method of claim 1 or 2, comprising receiving an indication from the radar-enabled UE about a desired sensing area, wherein the configuring of the radar sensing is based on the indication.

4. The method of any one of claims 1 to 3, wherein scheduling of the resources is performed by the network node or by the radar-enabled UE.

5. The method of claim 4, wherein when the scheduling of the resources is performed by the radar-enabled UE, the method comprises confirming the scheduling by the network node or adapting the scheduling.

6. The method of any one of claims 1 to 5, wherein the scheduling of resources is based on communication criticality of ongoing communication with the one or more other UEs.

7. The method of any one of claims 1 to 6, wherein the scheduling of resources is based on radar sensing criticality of radar sensing operations of one or more other radar-enabled UEs.

8. The method of any one of claims 1 to 7, comprising scheduling of resources for communication with the one or more other UEs based on radar sensing criticality of radar sensing operations of the radar-enabled UE.

9. The method of any one of claims 1 to 8, comprising
scheduling communication with the one or more other UEs; and
nulling, based on known radar waveform, in identified directions towards the radar-enabled UE to avoid radar interference when resources coincide while serving the one or more other UEs in other directions at the same time.

10. The method of any one of claims 1 to 9, further comprising determining the spatial resources based on at least one of: a position of the radar-enabled UE with respect to one or more radio network nodes of the wireless communication network around the radar-enabled UE, or positions of the one or more other UEs in relation to the radar-enabled UE.

11. The method of any of claims 1-10, wherein configuring the radar sensing by the radar-enabled UE comprises determining the radar sensing by the radar-enabled UE in dependence on at least one of: measured or expected levels of uplink UL reception interference at a radio network node of the wireless communication network, or measured or expected levels of downlink DL reception interference at the one or more other UEs.

12. The method of any of claims 1-11, wherein configuring the radar sensing by the radar-enabled UE comprises configuring the radar sensing based on measured or expected levels of UL or DL reception interference arising from radar sensing by the radar-enabled UE.

13. The method of any of claims 1 to 12, comprising receiving information from at least a subset of the one or more other UEs indicating UE capability to cancel or null interference, the information influencing the configuring of the radar sensing; and
transmitting an indication to the subset of the one or more of the one or more other UEs about interference mitigation when radar sensing is adopted.

14. A network node configured for operation in a wireless communication network, the network node configured to perform the method operations of any of claims 1-13.

15. The network node of claim 14, wherein the network node is a base station.

## Patentansprüche

1. Verfahren zum Betrieb eines Netzwerkknotens eines Drahtlos-Kommunikationsnetzwerks, umfassend:
Konfigurieren einer Radarerfassung durch ein radarfähiges Benutzergerät, UE, zur Koexistenz mit Netzwerkkommunikationen, an denen ein oder mehrere andere UEs beteiligt sind, wobei die Radarerfassung und die Netzwerkkommunikation ein selbes Frequenzband oder überlappende Frequenzbänder nutzen; und
Senden von Konfigurationssignalisierung an das radarfähige UE, um dem radarfähigen UE Übernahme der Radarerfassung zu ermöglichen, wobei die Konfigurationssignalisierung Informationen über Planung von Ressourcen für die Radarerfassung umfasst, wobei die Ressourcen zulässige Leistungspegel und eine oder mehrere von Zeitressourcen, Frequenzressourcen und räumlichen Ressourcen umfassen.

2. Verfahren nach Anspruch 1, wobei die Konfigurationssignalisierung Informationen über Planung von Ressourcen in Uplink- oder Downlink-Fenstern der Netzwerkkommunikation umfasst.

3. Verfahren nach Anspruch 1 oder 2, umfassend Empfangen einer Angabe von dem radarfähigen UE über einen gewünschten Erfassungsbereich, wobei das Konfigurieren der Radarerfassung auf der Angabe basiert.

4. Verfahren nach einem der Ansprüche 1 bis 3, wobei Planen der Ressourcen durch den Netzwerkknoten oder durch das radarfähige UE durchgeführt wird.

5. Verfahren nach Anspruch 4, wobei, wenn das Planen der Ressourcen durch das radarfähige UE durchgeführt wird, das Verfahren Bestätigen der Planung durch den Netzwerkknoten oder Anpassen der Planung umfasst.

6. Verfahren nach einem der Ansprüche 1 bis 5, wobei das Planen der Ressourcen auf Kommunikationskritikalität einer laufenden Kommunikation mit dem einen oder den mehreren anderen UEs basiert.

7. Verfahren nach einem der Ansprüche 1 bis 6, wobei das Planen der Ressourcen auf Radarerfassungskritikalität von Radarerfassungsoperationen eines oder mehrerer anderer radarfähiger UEs basiert.

8. Verfahren nach einem der Ansprüche 1 bis 7, umfassend Planen von Ressourcen zur Kommunikation mit dem einen oder den mehreren anderen UEs auf Grundlage von Radarerfassungskritikalität von Radarerfassungsoperationen des radarfähigen UE.

9. Verfahren nach einem der Ansprüche 1 bis 8, umfassend
Planen einer Kommunikation mit einem oder mehreren anderen UEs und
Neutralisieren, basierend auf bekannten Radarwellenformen, in identifizierten Richtungen zum radarfähigen UE hin, um Radarinterferenzen zu vermeiden, wenn Ressourcen zusammenfallen, während sie gleichzeitig das eine oder die mehreren anderen UEs in anderen Richtungen bedienen.

10. Verfahren nach einem der Ansprüche 1 bis 9, weiter umfassend Bestimmen der räumlichen Ressourcen auf Grundlage mindestens eines von Folgendem: einer Position des radarfähigen UE in Bezug auf einen oder mehrere Funk-Netzwerkknoten des Drahtlos-Kommunikationsnetzwerks um das radarfähige UE oder Positionen des einen oder der mehreren anderen UEs in Bezug auf das radarfähige UE.

11. Verfahren nach einem der Ansprüche 1-10, wobei Konfigurieren der Radarerfassung durch das radarfähige UE Bestimmen der Radarerfassung durch das radarfähige UE in Abhängigkeit von mindestens einem von Folgendem umfasst: gemessene oder erwartete Pegel von Uplink-, UL-, Empfangsstörungen an einem Funknetzwerkknoten des Drahtlos-Kommunikationsnetzwerks oder gemessene oder erwartete Pegel von Downlink-, DL-, Empfangsstörungen an dem einem oder den mehreren anderen UEs.

12. Verfahren nach einem der Ansprüche 1 bis 11, wobei Konfigurieren der Radarerfassung durch das radarfähige UE Konfigurieren der Radarerfassung auf Grundlage gemessener oder erwarteter Pegel von UL- oder DL-Empfangsstörungen umfasst, die durch Radarerfassung durch das radarfähige UE entstehen.

13. Verfahren nach einem der Ansprüche 1 bis 12, umfassend Empfangen von Informationen von mindestens einer Teilmenge des einen oder der mehreren anderen UEs, welche die Fähigkeit der UEs zur Aufhebung oder Neutralisierung von Störungen anzeigen, wobei die Informationen das Konfigurieren der Radarsensorik beeinflussen; und
Übermitteln einer Benachrichtigung an eine Teilmenge des einen oder der mehreren anderen UEs über Störungsminderung, wenn Radarerfassung übernommen wird.

14. Netzwerkknoten, der für einen Betrieb in einem Drahtlos-Kommunikationsnetzwerk konfiguriert ist, wobei der Netzwerkknoten so konfiguriert ist, dass er die Verfahrensoperationen eines der Ansprüche 1 bis 13 durchführt.

15. Netzwerkknoten nach Anspruch 14, wobei es sich bei dem Netzwerkknoten um eine Basisstation handelt.

## Revendications

1. Procédé de fonctionnement par un nœud de réseau d'un réseau de communication sans fil comprenant :
la configuration d'une détection radar par un équipement utilisateur, UE, compatible radar pour la coexistence avec des communications réseau impliquant un ou plusieurs autres UE, dans lequel la détection radar et les communications réseau utilisent une même bande de fréquences ou des bandes de fréquences chevauchantes ; et
l'envoi d'une signalisation de configuration à l'UE compatible radar, pour permettre à l'UE compatible radar d'adopter la détection radar, dans lequel la signalisation de configuration comprend des informations sur la planification de ressources pour la détection radar, dans lequel les ressources comprennent des niveaux de puissance autorisés et une ou plusieurs parmi des ressources de temps, des ressources de fréquence et des ressources spatiales.

2. Procédé selon la revendication 1, dans lequel la signalisation de configuration comprend des informations sur la planification de ressources dans des créneaux de liaison montante ou de liaison descendante des communications réseau.

3. Procédé selon la revendication 1 ou 2, comprenant la réception d'une indication provenant de l'UE compatible radar sur une zone de détection souhaitée, dans lequel la configuration de la détection radar est basée sur l'indication.

4. Procédé selon l'une quelconque des revendications 1 à 3, dans lequel la planification des ressources est réalisée par le nœud de réseau ou par l'UE compatible radar.

5. Procédé selon la revendication 4, dans lequel lorsque la planification des ressources est réalisée par l'UE compatible radar, le procédé comprend la confirmation de la planification par le nœud de réseau ou l'adaptation de la planification.

6. Procédé selon l'une quelconque des revendications 1 à 5, dans lequel la planification de ressources est basée sur la criticité de communication d'une communication en cours avec les un ou plusieurs autres UE.

7. Procédé selon l'une quelconque des revendications 1 à 6, dans lequel la planification de ressources est basée sur la criticité de détection radar d'opérations de détection radar d'un ou de plusieurs autres UE compatibles radar.

8. Procédé selon l'une quelconque des revendications 1 à 7, comprenant la planification de ressources pour la communication avec les un ou plusieurs autres UE sur la base de la criticité de détection radar d'opérations de détection radar de l'UE compatible radar.

9. Procédé selon l'une quelconque des revendications 1 à 8, comprenant
la planification d'une communication avec les un ou plusieurs autres UE ; et
la mise à zéro, basée sur une forme d'onde radar connue, dans des directions identifiées vers l'UE compatible radar pour éviter des interférences radar lorsque des ressources coïncident tout en desservant les un ou plusieurs autres UE simultanément dans d'autres directions.

10. Procédé selon l'une quelconque des revendications 1 à 9, comprenant en outre la détermination des ressources spatiales sur la base d'au moins un élément parmi : une position de l'UE compatible radar par rapport à une ou plusieurs nœuds de réseau radio du réseau de communication sans fil autour de l'UE compatible radar ou des positions des un ou plusieurs autres UE par rapport à l'UE compatible radar.

11. Procédé selon l'une quelconque des revendications 1-10, dans lequel la configuration de la détection radar par l'UE compatible radar comprend la détermination de la détection radar par l'UE compatible radar en fonction d'au moins un élément parmi : des niveaux mesurés ou attendus d'interférences de réception de liaison montante, UL, au niveau d'un nœud de réseau radio du réseau de communication sans fil ou des niveaux mesurés ou attendus d'interférences de réception de liaison descendante, DL, au niveau des un ou plusieurs autres UE.

12. Procédé selon l'une quelconque des revendications 1-11, dans lequel la configuration de la détection radar par l'UE compatible radar comprend la configuration de la détection radar sur la base de niveaux mesurés ou attendus d'interférences de réception d'UL ou de DL résultant d'une détection radar par l'UE compatible radar.

13. Procédé selon l'une quelconque des revendications 1 à 12, comprenant la réception d'informations provenant d'au moins un sous-ensemble parmi les un ou plusieurs autres UE indiquant une capacité de l'UE à annuler ou à mettre à zéro des interférences, les informations influençant la configuration de la détection radar ; et
la transmission d'une indication au sous-ensemble des un ou plusieurs parmi les un ou plusieurs autres UE sur l'atténuation des interférences lorsque la détection radar est adoptée.

14. Nœud de réseau configuré pour fonctionner dans un réseau de communication sans fil, le nœud de réseau étant configuré pour réaliser les opérations de procédé selon l'une quelconque des revendications 1-13.

15. Nœud de réseau selon la revendication 14, dans lequel le nœud de réseau est une station de base.
